# FASCICULE DE BREVET EUROPEEN

(11) **EP 0 519 847 B1**
(45) Date de publication et mention de la délivrance du brevet: **12.03.1997**
(21) Numéro de dépôt: 92420207.0
(22) Date de dépôt: 16.06.1992
(51) Int. Cl.: G06K 19/07, G07F 7/08, G07F 7/02, G06F 12/14

(54) **Carte à mémoire de comptage de données et appareil de lecture**
Speicherkarte zur Zählung von Daten und Lesevorrichtung
Data count memory card and reading apparatus

(30) Priorité: 20.06.1991 FR 9108126
(43) Date de publication de la demande: 23.12.1992
(73) Titulaire: FRANCE TELECOM, 75015 Paris (FR); LA POSTE, ETABLISSEMENT AUTONOME DE DROIT PUBLIC, F-75700 Paris (FR); SGS-THOMSON MICROELECTRONICS S.A., 94250 Gentilly (FR)
(72) Inventeur: Depret, Eric, F-14000 Caen (FR); Sourgen, Laurent, Résidence les Hauts, F-13100 Aix en Provence (FR)
(74) Mandataire: de Beaumont, Michel

(56) Documents cités:
- EP-A- 0 268 106
- EP-A- 0 378 454
- FR-A- 2 386 080
- FR-A- 2 600 795

## Description

La présente invention concerne les circuits intégrés pour support portable de type passif, c'est-à-dire ne comprenant pas de microprocesseur interne mais seulement une mémoire et des moyens de décodage pour, en réponse à un nombre limité de signaux de commande, accéder séquentiellement à des cases successives de cette mémoire et y effectuer des opérations de lecture, d'écriture ou d'effacement.

On ne mentionnera ci-après, par souci de simplicité, que des cartes à mémoire car il s'agit d'un support plus couramment utilisé mais il est clair que tout autre support portable peut être utilisé. Ainsi on désigne ci-après par carte à mémoire l'ensemble d'un circuit intégré, de ses bornes d'accès et d'un support portable quelconque associable à un lecteur.

Une application courante des cartes à mémoire est celle des cartes téléphoniques prépayées. Dans de telles cartes, les cases de la mémoire sont initialement dans un certain état, et cet état est modifié en réponse à des impulsions externes correspondant par exemple à des unités téléphoniques, ou à des unités de coût d'un service quelconque fourni par un lecteur dans lequel est insérée la carte.

La présente invention vise plus particulièrement des cartes dans lesquelles la mémoire de comptage de données est une mémoire effaçable électriquement, par exemple une mémoire de type EEPROM, c'est-à-dire une mémoire morte électriquement programmable et électriquement effaçable.

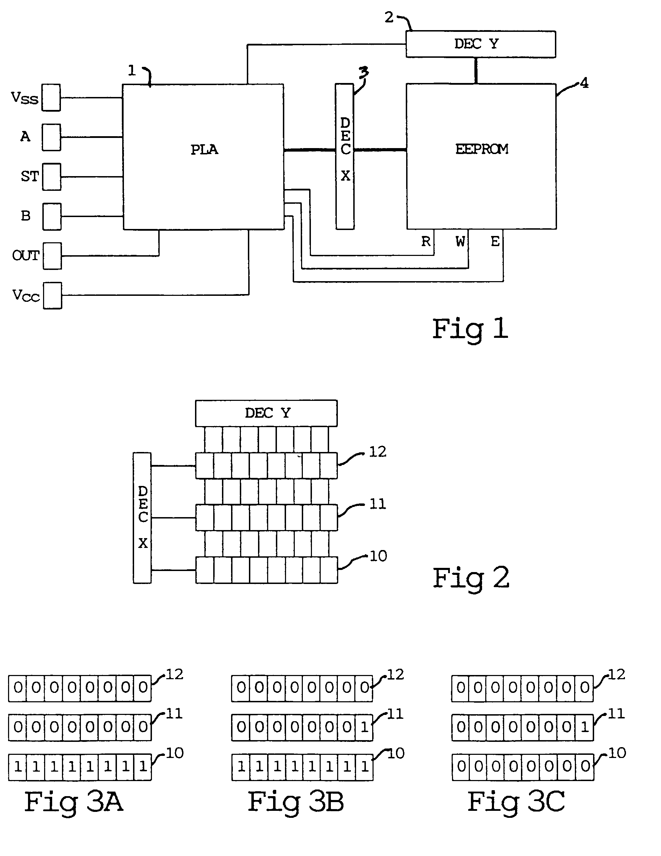

La figure 1 représente très schématiquement les principaux éléments d'une puce semiconductrice utilisable dans une carte à mémoire de ce type. Traditionnellement, cette carte est associée à un lecteur avec lequel la carte peut communiquer par six plots d'accès : deux plots d'alimentation VSS et VCC, un plot de sortie OUT, et trois plots de programmation A, ST et B. Les plots de programmation envoient des signaux vers un ensemble de circuits logiques ou réseau logique programmable 1 pour commander un décodeur de colonne 2 (DEC Y) et un décodeur de ligne 3 (DEC X) associés à une mémoire EEPROM 4. Les circuits logiques 1 permettent également, en fonction des signaux de commande, de placer la mémoire dans un état de lecture (R), d'écriture (W) ou d'effacement (E). Dans l'état de lecture, la case adressée de la mémoire est lue, c'est-à-dire que son état est fourni sur la borne OUT. Dans l'état d'écriture, l'état de la case de mémoire adressée est mis à 1. Dans l'état d'effacement, un ensemble de cases adressées simultanément est remis à zéro. Plus particulièrement, les bornes de commande A, ST et B sont généralement prévues pour recevoir l'un ou l'autre de trois ordres de commande : un ordre de remise à zéro qui établit un positionnement sur le premier bit de la mémoire, un ordre de lecture qui permet l'incrémentation de l'adresse mémoire et la fourniture en sortie de la valeur de la case adressée, et un ordre de programmation qui permet d'inverser l'état de la case ou des cases adressées pour réaliser une écriture ou un effacement. Selon une caractéristique de ce type de mémoire, il n'est pas possible d'adresser simultanément en lecture et en écriture ou en effacement des emplacements distincts de la mémoire.

L'un des avantages de l'utilisation d'une mémoire sélectivement effaçable électriquement est que l'on peut organiser la mémoire en un système de type boulier. Ceci signifie que la mémoire est organisée en plusieurs étages comprenant chacun un certain nombre de cases. Chaque fois qu'un étage de rang inférieur est plein, on valide une case de l'étage de rang immédiatement supérieur et on efface les cases des étages de rangs inférieurs. Ainsi, par exemple, avec trois étages de huit cases on pourra compter au moins 8x8x8 informations au lieu de seulement 8+8+8 si la mémoire n'était pas effaçable. L'état de la technique et la présente invention seront exposés ci-après dans le cas de trois étages comprenant chacun huit cases mais il sera clair pour l'homme de métier qu'un nombre plus élevé d'étages pourra être utilisé et que les étages ne comprendront pas nécessairement le même nombre de cases. De façon générale, on pourra prévoir p étages comprenant chacun nᵢ cases (i=1...p) et ainsi on pourra mémoriser dans la mémoire n₁xn₂x... xnₚ informations. On considérera plus particulièrement, à titre d'exemple, le cas où les étages de rang inférieur sont effacés séquentiellement après une inscription dans un registre de rang supérieur.

L'organisation élémentaire d'une mémoire de type boulier est illustrée en figure 2 où l'on a représenté trois étages de huit cases 10, 11 et 12 adressables par un décodeur de colonnes (DEC Y) et un décodeur de rangées (DEC X).

Les figures 3A, 3B et 3C représentent un premier exemple de remplissage d'étages ou registres organisés en boulier. La figure 3A représente l'étage de rang inférieur, 10, plein et les étages 11 et 12 vides. A l'étape illustrée en figure 3B, après remplissage de l'étage 10, l'action des décodeurs X et Y amène l'adressage vers la case inférieure de l'étage 11 et un 1 est inscrit dans cet étage. A l'étape de la figure 3C, tout le contenu de l'étage 10 est effacé. Ensuite l'écriture reprend à la case de rang inférieur de l'étage 10 (non représenté).

Bien entendu, ces adressages successifs sont assurés par le lecteur associé à la carte qui comprend des circuits logiques propres à assurer ces opérations. En particulier, le lecteur commence, quand une carte y est insérée, par lire le contenu de toutes les mémoires pour déterminer l'état de la carte et fixer l'adressage à effectuer. Ainsi, le lecteur sait dans quel état de remplissage se trouvent les divers étages et peut assurer la commande d'adressage adéquate. Toutefois, comme cela a été indiqué précédemment, il est seulement possible d'effectuer à un instant donné une opération de lecture ou une opération d'écriture ou d'effacement, c'est pourquoi le passage de l'état représenté en figure 3A à l'état représenté en figure 3C doit se faire en passant par l'état intermédiaire illustré en figure 3B.

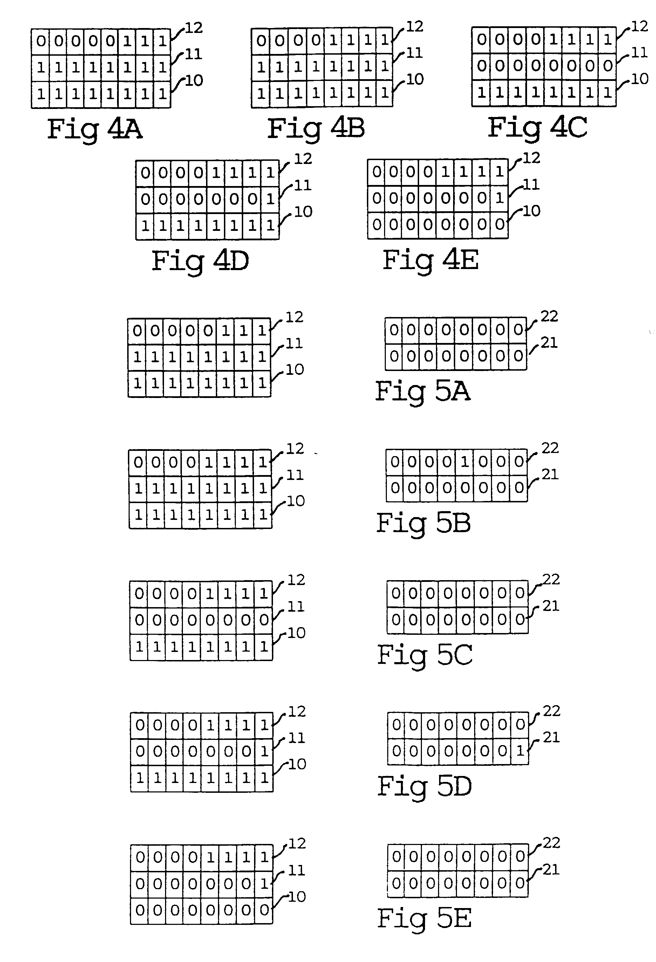

Les figures 4A à 4E illustrent un autre exemple d'états successifs des étages de la zone mémoire. En figure 4A les étages 10 et 11 sont pleins et trois cases de l'étage 12 ont été remplies. A l'étape illustrée en figure 4B, un bit supplémentaire est inscrit dans l'étage 12. A l'étape illustrée en figure 4C le contenu de l'étage 11 est effacé. A l'étape illustrée en figure 4D, un bit supplémentaire est inscrit dans l'étage 11. A l'étape illustrée en figure 4E le contenu de l'étage 10 est effacé. L'inscription d'un 1 à l'étape de la figure 4D permet la réalisation d'une mémorisation par multiples de 8 et non de 9 ; de plus les circuits logiques du lecteur " savent " que, dès qu'il existe une inscription dans le registre 12, il doit exister au moins un 1 dans le registre 11 et ceci peut être utilisé pour une détection d'erreur éventuelle.

Ce qui vient d'être décrit, correspond à l'état existant de la technique pour situer l'environnement dans lequel est susceptible de s'insérer la présente invention.

L'organisation décrite ci-dessus présente un inconvénient à savoir que si, pour une rai son quelconque, le traitement d'une carte est brutalement interrompu alors que l'on se trouve à l'état illustré en figure 3B, 4B ou 4D, c'est-à-dire alors que les étages de rang inférieur à celui dans lequel on vient d'effectuer une inscription n'ont pas encore été effacés, quand on réinsérera la carte dans un lecteur, oelle-ci restera dans cet état. En conséquence, la mémoire aura été chargée d'un nombre d'unités plus élevé que le service ayant été effectivement fourni (8 unités excédentaires dans le cas des figures 3B ou 4D, 8x8=64 unités dans le cas illustré en figure 4B). Ce défaut est tout particulièrement susceptible de se produire dans les lecteurs de carte modernes dans lesquels la carte n'est pas avalée par le lecteur mais reste apparente, c'est-à-dire que l'utilisateur peut retirer brutalement sa carte à un état intermédiaire correspondant à la figure 3B ou 4B à 4D. Cet utilisateur se trouvera alors lésé.

La présente invention a pour but d'éviter cet inconvénient et d'assurer lors d'une utilisation ultérieure de la carte un effacement des étages de rangs inférieurs qui n'auraient pas été effacés à la fin d'une opération précédente.

Pour atteindre cet but, la présente invention prévoit un circuit intégré destiné à un support portable passif de comptage d'unités, le circuit intégré comprenant p étages de mémoire non volatile de comptage de données contenant des nombres de cases respectifs n₁...nₚ, des moyens pour effectuer une écriture dans une case d'un étage supérieur chaque fois que toutes les cases de l'étage inférieur ont été validées, et pour ensuite invalider les cases des étages inférieurs, caractérisé en ce que le circuit intégré comprend en outre p-1 étages témoin non volatile identiques aux p-1 étages de rang supérieur des p étages de comptage, et une logique d'adressage des étages témoin telle que les cases de ces étages témoin sont adressées en écriture simultanément avec les cases des étages de comptage correspondants et, après une écriture, sont adressées en effacement en même temps que les cases des étages de comptage de rang inférieur à celui qui vient d'être validé.

Selon un mode de réalisation de la présente invention, un décodeur d'adresse associé à chaque étage de mémoire permet dans les phases d'écriture un adressage simultané de l'étage témoin correspondant et dans les phases d'effacement de l'étage témoin de rang immédiatement supérieur.

Un lecteur associé à un support portable selon l'invention comprend des moyens de lecture initiale de toutes les cases des étages témoin et des moyens sensibles à une inscription dans une case d'un étage témoin pour effacer simultanément cette case de l'étage témoin et les cases de l'étage de rang immédiatement inférieur de comptage de données.

Ces objets, caractéristiques et avantages ainsi que d'autres de la présente invention seront exposés en détail dans la description suivante d'un mode de réalisation particulier faite en relation avec les figures jointes parmi lesquelles :
les figures 1 à 4 décrites précédemment sont destinées à situer l'environnement dans lequel s'insère la présente invention ;
les figures 5A à 5E sont destinées à illustrer dans le cas d'un exemple particulier le procédé mis en oeuvre par le dispositif selon la présente invention ; et
la figure 6 représente de façon un peu plus détaillée un exemple de mise en oeuvre de la présente invention.

Les figures 5A à 5E représentent trois étages de comptage de données dans le cadre du même exemple que celui décrit précédemment en relation avec les figures 4A à 4E.

Selon la présente invention, on prévoit dans la mémoire EEPROM 4 de la figure 1, outre les étages de comptage de données 10, 11, 12 décrits précédemment, des étages témoin correspondant aux étages supérieurs des étages de comptage. Ainsi, dans le cas particulier décrit précédemment, où il est prévu trois étages de comptage de huit bits 10, 11 et 12, on prévoiera deux étages témoin de huit bits 21 et 22. Plus généralement, s'il y a p étages de comptage comprenant respectivement n₁.. . nₚ cases, il y aura p-1 étages témoin comprenant respectivement n₂. .. nₚ cases.

Lors de l'inscription d'un 1 dans l'un des étages 11 et 12, un 1 sera simultanément écrit dans la case correspondante de l'étage témoin correspondant 21 ou 22 et, pendant chaque effacement d'un étage de rang inférieur suivant l'inscription d'un 1 dans l'étage de comptage de rang supérieur, le 1 inscrit dans l'étage témoin sera simultanément effacé.

Dans les figures 5A à 5E, les états successifs des étages 10, 11 et 12 sont identiques aux états successifs de ces étages dans les figures 4A à 4E. Dans l'état de la figure 5A, tous les bits des étages témoin 21 et 22 sont à zéro. Dans l'état de la figure 5B, en même temps qu'un 1 est inscrit dans la quatrième case de l'étage 12, un 1 est inscrit dans la quatrième case de l'étage 22. Dans l'état de la figure 5C, en même temps que l'étage 11 est effacé, l'étage 22 est effacé. Dans l'état de la figure 5D, en même temps qu'un 1 est inscrit dans la dernière case de l'étage 11, un 1 est inscrit dans la dernière case de l'étage 21. Dans l'état de la figure 5E, en même temps que l'étage 10 est effacé, l'étage 21 est effacé de sorte que les étages témoin se retrouvent vides.

Ainsi, si les opérations effectuées dans la carte à mémoire par le lecteur sont brutalement interrompues aux étapes intermédiaires comprises entre les figures 5B et 5C ou 5D et 5E, lors d'une introduction ultérieure de la carte dans un lecteur, le lecteur verra le 1 inscrit dans l'étage témoin 22 ou 21 et pourra déclencher les opérations nécessaires à l'obtention de l'état illustré en figure 5E avant d'effectuer toute nouvelle opération de comptage de données dans la carte. On notera que le procédé décrit ne permet pas la détection d'une interruption accidentelle entre les états des figures 5C et 5D, les registres témoins étant alors vides, mais un tel état de défaut peut être détecté par les circuits existants comme on l'a indiqué précédemment.

Etant donné le fonctionnement souhaité du circuit selon la présente invention exposé précédemment, l'homme de métier pourra exécuter les opérations de décodage propres à remplir les fonctions adéquates. On indiquera ci -après uniquement à titre d'exemple, un mode de réalisation particulier de circuit permettant d'assurer l'inscription simultanée d'un 1 dans un registre de rang supérieur et dans le registre témoin correspondant puis l'effacement simultané des registres témoin et des registres de comptage de rang inférieur à celui dans lequel on vient d'inscrire une donnée.

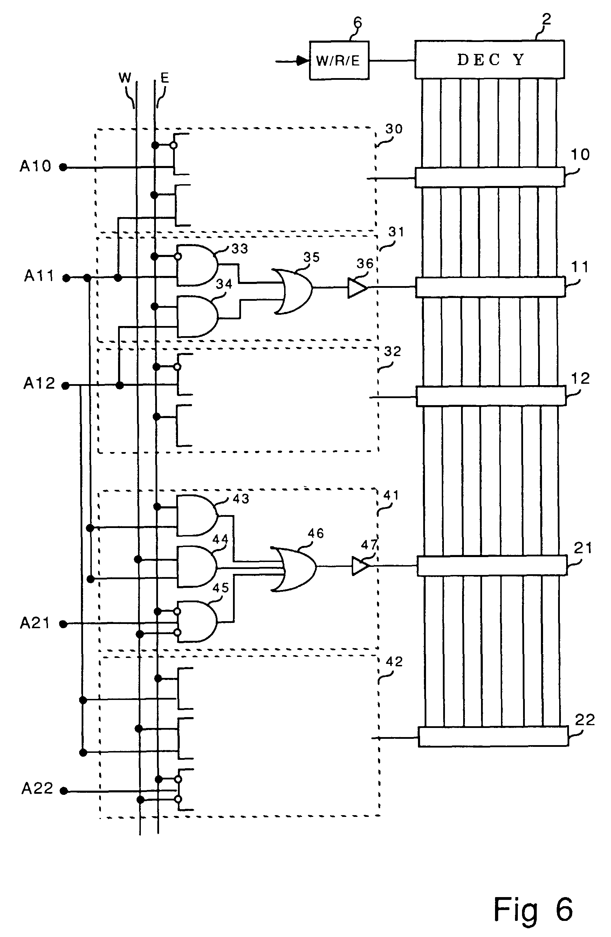

Ainsi, la figure 6 représente de façon très schématique des circuits de décodage associés aux étages de comptage 10, 11 et 12 et à deux étages témoins correspondants 21 et 22. Dans cette figure, le décodeur Y 2 est encore représenté de façon très schématique associé à un circuit de détermination d'écriture, lecture ou effacement (W, R ou E) 6. Les circuits 2 et 6 sont commandés par les circuits logiques 1 classiques représentés sous forme de blocs en figure 1. Les étages 10, 11 et 12 peuvent être adressés en X par des lignes d'adresse A10, A11 et A12 fournies par le décodeur de rangées DEC X 3 représenté sous forme de blocs en figures 1 et 2. Il est également prévu des lignes d'adresse A21, A22 pour désigner les rangées correspondant aux étages 21 et 22.

Entre chacune des lignes d'adresse A10, A11 et A12 et chacun des étages 10, 11 et 12 est inséré un bloc logique, respectivement 30, 31 et 32, et entre chacune des lignes d'adresse A21, A22 et chacun des étages 21 et 22 est inséré un bloc logique, respectivement 41 et 42. On décrira ci-après seulement les blocs logiques 31 et 41, les blocs logiques 30, 31 et 32 étant identiques, de même que les blocs logiques 41 et 42.

Le bloc logique 31 comprend des portes ET à deux entrées 33 et 34, une porte OU 35 et un étage amplificateur 36 susceptible, selon la commande W/R/E du bloc 6 d'effectuer une inscription, une lecture, ou un effacement dans la rangée 11. Il est en outre prévu des lignes de commande d'écriture W et de commande d'effacement E, correspondant aux états dans le bloc 6. La porte ET 33 a une première entrée inverseuse connectée à la ligne E. La deuxième entrée de la porte ET 33 est connectée à la ligne d'adresse A11 (cette ligne A11 est aussi connectée à la deuxième entrée de la porte ET 34 du bloc 30 de rang inférieur). La première entrée de la porte ET 34 est connectée à la ligne E. La deuxième entrée de la porte ET 34 est connectée à la ligne d'adresse A12 de l'étage de rang supérieur. Les sorties des portes ET 33 et 34 sont appliquées, par l'intermédiaire de la porte OU 35 et de l'étage amplificateur 36, à la rangée 11.

Le bloc logique 41 comprend trois portes ET 43, 44 et 45 dont les sorties sont appliquées par l'intermédiaire d'une porte OU 46 et d'un circuit amplificateur 47 à la rangée 21. La première entrée de la porte ET 43 est reliée à la ligne E. La deuxième entrée de la porte ET 43 est reliée à l'entrée d'adresse A11. La première entrée de la porte ET 44 est connectée à la ligne d'écriture W et sa deuxième entrée est connectée à la ligne d'adresse A11. La première entrée de la porte ET 45 est connectée à la ligne d'adresse A21 et les deuxième et troisième entrées de cette porte ET 45 sont des entrées inverseuses respectivement reliées à la ligne d'écriture W et à la ligne d'effacement E.

Le fonctionnement de ces circuits logiques est le suivant. Les étages témoin 21 et 22 peuvent être sélectivement adressés pour déterminer leur contenu en envoyant des signaux d'adresse sur les lignes d'adresses respectives A21 et A22, et bien entendu en incrémentant de façon appropriée le décodeur de colonne 2. Cet adressage spécifique des étages 21 et 22 n'est possible qu'en dehors des phases d'écriture ou d'effacement en raison des deux entrées inverseuses reliées aux lignes d'écriture et d'effacement de la porte ET 45.

Par contre, quand on est dans une phase d'écriture, et que la rangée 11 a été désignée par l'adresse A11, d'une part la rangée 11 est désignée par l'adresse A11 sous l'effet de la porte ET 33, d'autre part la rangée 21 est adressée sous l'effet de la porte ET 44 validée par l'adresse A11 et la ligne d'écriture W. Ainsi, un 1 est écrit simultanément en un même emplacement Y dans les rangées 11 et 21.

On obtient alors un état correspondant à celui de la figure 5B. S'il se produit une interruption, cet état sera détecté lors d'une réinsertion de la carte dans le lecteur par la lecture de l'étage 21 par suite de l'actionnement de la ligne d'adresse A21.

Si aucune interruption ne s'est produite, l'adresse A11 reste sélectionnée, la ligne d'écriture W est amenée à bas niveau, et la ligne d'effacement E est amenée à haut niveau tandis que toutes les colonnes sont sélectionnées en effacement par le décodeur Y 2 et le circuit logique 6. Alors, la porte ET 33 de l'étage 31 est inhibée par l'apparition du signal d'effacement tandis que la porte ET 34 de l'étage 30 est validée par le signal d'adresse A11 et le signal d'effacement E. Ainsi, toutes les colonnes de la rangée 10 sont effacées simultanément. En même temps, l'existence d'un signal à niveau haut sur les lignes A11 et E valide la porte ET 43 du circuit logique 41 et toutes les cases de la rangée 21 sont également commandées en effacement.

Bien entendu, la présente invention est susceptible de nombreuses variantes et modifications qui apparaîtront à l'homme de l'art, notamment en ce qui concerne le nombre de cases des divers étages et le nombre d'étages. D'autre part, dans les exemples précédents, on a indiqué des validations par des états 1 ou des états 0, il sera clair pour l'homme de l'art que l'on peut toujours construire un système cohérent dans lequel il se présente une inversion des états hauts et des états bas. En outre, seules les parties de la carte à mémoire et du lecteur utiles à la compréhension de la présente invention ont été expliquées. Il est clair que la carte comprendra d'autres caractéristiques usuelles. Par exemple, sa mémoire comprendra des zones d'identification non effaçables, divers circuits de sécurité, par exemple pour éviter des sur-écritures, ces circuits de sécurité pouvant être modifiés pour la mise en oeuvre de la présente invention ...

## Revendications

1. Circuit intégré destiné à un support portable passif de comptage d'unités, le circuit intégré comprenant p étages de mémoire non volatile de comptage de données (10, 11, 12) contenant des nombres de cases respectifs n₁...nₚ, des moyens pour effectuer une écriture dans une case d'un étage supérieur chaque fois que toutes les cases de l'étage inférieur ont été validées, et pour ensuite invalider les cases des étages inférieurs, caractérisé en ce que le circuit intégré comprend en outre p-1 étages témoin non volatiles (21, 22) identiques aux p-1 étages de rang supérieur des p étages de comptage, et une logique d'adressage des étages témoin telle que les cases de ces étages témoin sont adressées en écriture simultanément avec les cases des étages de comptage correspondants et, après une écriture, sont adressées en effacement en même temps que les cases des étages de comptage de rang inférieur à celui qui vient d'être validé.

2. Circuit selon la revendication 1, caractérisé en ce qu'un décodeur d'adresse associé à chaque étage de mémoire permet un adressage simultané dans les phases d'écriture de l'étage témoin de même rang.

3. Circuit selon la revendication 1, caractérisé en ce qu'un décodeur d'adresse associé à chaque étage de mémoire permet un adressage simultané dans les phases d'effacement de l'étage témoin de rang immédiatement supérieur.

4. Lecteur associé à un support portable comprenant un circuit intégré selon la revendication 1, caractérisé en ce qu'il comprend :
des moyens de lecture initiale de toutes les cases des étages témoin, et
des moyens sensibles à une inscription dans une case d'un étage témoin pour effacer simultanément cette case de l'étage témoin et les cases de l'étage de rang immédiatement inférieur des étages de comptage de données.

## Patentansprüche

1. Integrierte Schaltung für einen passiven tragbaren Schaltungsträger zum Zählen von Einheiten, wobei die integrierte Schaltung p nicht-flüchtige Speicherstufen bzw. -niveaus zum Zählen von Daten (10, 11, 12) aufweist, welche eine Anzahl entsprechender Speicherplätze n₁ ... nₚ umfaßt, des weiteren Mittel zur Ausführung eines Schreibvorgangs in einem Speicherplatz einer höheren Stufe bzw. eines höheren Niveaus, sobald jeweils sämtliche Speicherplätze der niedrigeren Stufe bzw. des niedrigeren Niveaus aktiviert wurden, sowie zur anschließenden Desaktivierung sämtlicher Speicherplätze der niedrigeren Stufen bzw. Niveaus,
dadurch gekennzeichnet, daß die integrierte Schaltung des weiteren p - 1 nicht-flüchtige Prüf- bzw. Kontrollstufen bzw. -niveaus (21, 22) von gleicher Art wie die höherrangigen p - 1 Stufen bzw. Niveaus der p Zählstufen bzw. -niveaus aufweist, sowie eine Adressierlogik für die Prüf- bzw. Kontrollstufen bzw. -niveaus, derart, daß die Speicherplätze dieser Prüf- bzw. Kontrollstufen bzw. -niveaus gleichzeitig mit den Speicherplätzen der entsprechenden Zählerstufen bzw. -niveaus für Schreibbetrieb adressiert und nach dem Schreibvorgang gleichzeitig mit den Speicherplätzen der Zählerstufen bzw. -niveaus von niedrigerem Rang als die zuvor eben betätigte für Löschung adressiert werden.

2. Schaltung nach Anspruch 1,
dadurch gekennzeichnet, daß ein jeweils jeder Speicherstufe bzw. -niveau zugeordneter Adreßdecoder eine gleichzeitige Adressierung der Prüf- bzw. Kontrollstufe bzw. -niveau des gleichen Rangs in den Schreibphasen gestattet.

3. Schaltung nach Anspruch 1,
dadurch gekennzeichnet, daß ein jeweils jeder Speicherstufe bzw. -niveau zugeordneter Adreßdecoder eine gleichzeitige Adressierung der unmittelbar ranghöheren Prüf- bzw. Kontrollstufe in den Löschphasen gestattet.

4. Lesevorrichtung in Zuordnung zu einem eine integrierte Schaltung gemäß Anspruch 1 enthaltenden tragbaren Schaltungsträger,
dadurch gekennzeichnet, daß sie umfaßt:
- Mittel zum anfänglichen Auslesen sämtlicher Speicherplätze der Prüf- bzw. Kontrollstufen bzw. -niveaus, sowie
- auf einen Schreibeintrag in einem Speicherplatz einer Prüf- bzw. Kontrollstufe ansprechende Mittel zum gleichzeitigen Löschen dieses Speicherplatzes der Prüf- bzw. Kontrollstufe und der Speicherplätze der unmittelbar rangniedrigeren Stufe der Datenzählstufen.

## Claims

1. An integrated circuit for a passive portable support for counting units, the integrated circuit comprising p levels of non-volatile memory for counting data (10, 11, 12) containing respective numbers of memory cases n₁...nₚ, means for achieving a write operation in a case of an upper rank level each time all cases of the lower rank level have been enabled and for then disabling lower level cases, characterized in that the integrated circuit further comprises p-1 non-volatile ghost levels (21, 22) identical to the p-1 upper rank levels of the p counting levels, and an addressing logic of the ghost levels such that the cases of said ghost levels are addressed in write phase simultaneously with the cases of the corresponding counting levels and, after a write phase, are addressed in erase phase simultaneously with the cases of the counting levels of lower rank than the one that has just been enabled.

2. A circuit according to claim 1, characterized in that an address decoder associated with each memory level is provided for simultaneously addressing during write phases the ghost level of a same rank.

3. A circuit according to claim 1, characterized in that an address decoder associated with each memory level is provided for simultaneously addressing during erase phases the ghost level of immediate upper rank.

4. A reader associated with a portable support including an integrated circuit according to claim 1, characterized in that it comprises:
means for initially reading all the memory cases of the ghost levels, and
means sensitive to a write operation in a case of a ghost level to simultaneously erase said case of the ghost level and the cases of the level of immediate lower rank of the data counting levels.
